(19)

Europäisches Patentamt
European Patent Office
Office européen des brevets

(11) **EP 4 328 810 A1**

(12) **EUROPEAN PATENT APPLICATION**

(43) Date of publication:
**28.02.2024 Bulletin 2024/09**

(21) Application number: **23183281.7**

(22) Date of filing: **04.07.2023**

(51) International Patent Classification (IPC):
***G06N 10/20*** (2022.01)

(52) Cooperative Patent Classification (CPC):
**G06N 10/20; G06N 10/80**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.08.2022 JP 2022132061**

(71) Applicant: **Fujitsu Limited**
**Kawasaki-shi, Kanagawa 211-8588 (JP)**

(72) Inventor: **Kimura, Yusuke**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **DISPLAY PROGRAM, DISPLAY METHOD, AND INFORMATION PROCESSING APPARATUS**

(57)    A display program for causing a computer to execute a process, the process includes determining, among a first plurality of bits in a quantum circuit, a position that is not located between a second plurality of bits of a first type, the position being a position of a bit of a second type, determining an order of the second plurality of bits, based on a number of times a gate circuit intersects an unrelated bit among the second plurality of bits, and displaying the first plurality of bits in parallel, based on the determined position and the determined order.

## FIG. 6

**Description**

FIELD

The embodiment discussed herein is related to a display program, a display method, and an information processing apparatus that display a quantum circuit.

BACKGROUND

Research and development of quantum computers have become active, and users of various levels from a novice learner to a skilled person edit quantum circuits. There is a related art in which a graphical user interface (GUI) of a quantum circuit is displayed to allow easy editing of the quantum circuit also by a novice learner.

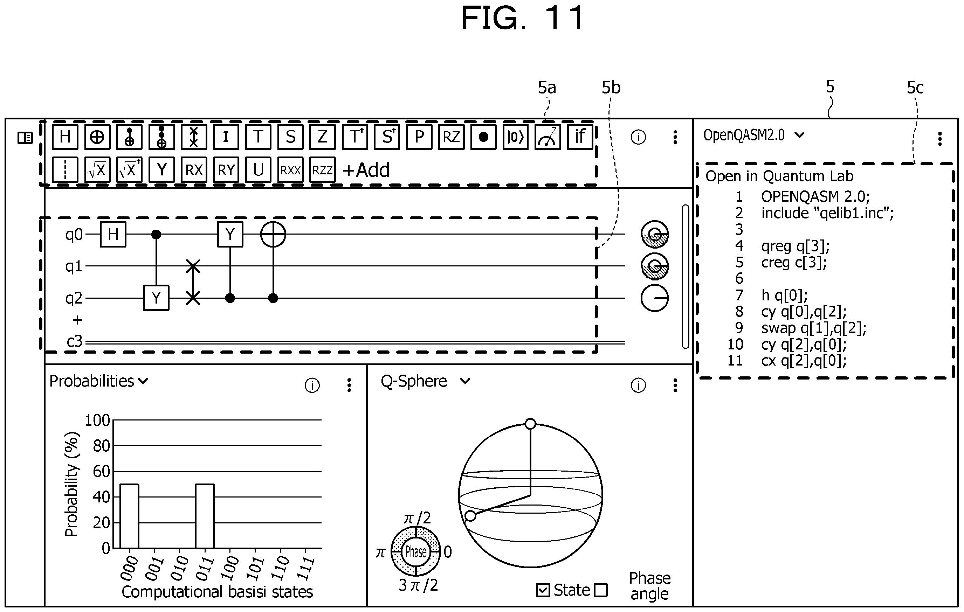

FIG. 11 is a diagram illustrating an example of the GUI of the quantum circuit in the related art. As illustrated in FIG. 11, in a GUI 5, there is a region 5a in which a plurality of parts relating to the quantum circuit are arranged. The user may create the quantum circuit by dragging and dropping the parts included in the region 5a to a region 5b of qubits. The user may also write a source code in the Open Quantum Assembly Language (OpenQASM) notation in a region 5c, and thereby cause the quantum circuit corresponding to the source code in the region 5c to be displayed in the region 5b.

There is a related art in which, in drawing of a force-directed graph, Coulomb force (repulsive force) and springs are assumed among nodes to draw the graph in an easily-readable manner. Providing parameters of the Coulomb force and spring constants enables drawing of graphs of many variations.

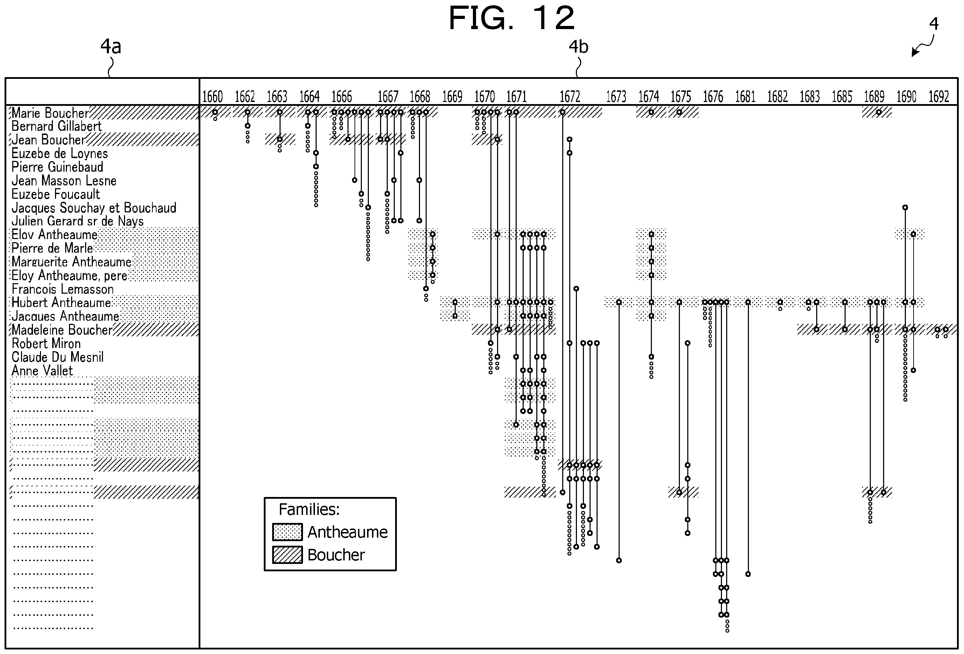

There is also a related art for displaying a graph using a time series axis in an easily-readable manner. FIG. 12 is a diagram illustrating an example of the graph of the related art. Person names are arranged in a region 4a on a vertical axis of a graph 4 in FIG. 12, and each of years corresponding to the time series is set in a region 4b on a horizontal axis. A circle is set in a cell corresponding to a year in which a certain person published a paper. An edge is set for each circle. According to the related art, the person names in the region 4a are rearranged such that the edges become as short as possible.

Japanese Laid-open Patent Publication No. 2021-179573, Japanese National Publication of International Patent Application No. 2005-513680, and U.S. Patent Application Publication Nos. 2021/0216898 and 2019/0102496 are disclosed as related art.

For example, when the quantum circuit is created or browsed with the GUI by using the related art described in FIG. 11, a quantum gate may cross over an unrelated qubit. Presence of a quantum gate crossing over an unrelated qubit as described above has a problem of making reading of the quantum circuit difficult.

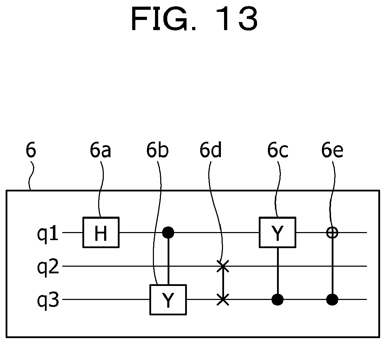

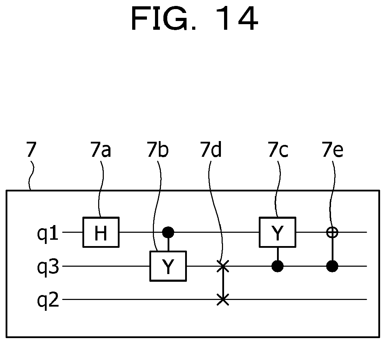

FIGs. 13 and 14 are diagrams for explaining a problem of the related art. In a quantum circuit 6 illustrated in FIG. 13, an H gate 6a, CY gates 6b and 6c, a SWAP gate 6d, and a CX gate 6e are arranged on qubits q1, q2, and q3. Although the qubit q2 is unrelated to the CY gates 6b and 6c and the CX gate 6e in the quantum circuit 6, the CY gates 6b and 6c and the CX gate 6e cross over the qubit q2 and make the quantum circuit 6 difficult to read.

Description proceeds to explanation of FIG. 14. A quantum circuit 7 illustrated in FIG. 14 is a circuit equivalent to the quantum circuit 6 described in FIG. 13. In the quantum circuit 7, an H gate 7a, CY gates 7b and 7c, a SWAP gate 7d, and a CX gate 7e are arranged on qubits q1, q2, and q3. Since the CY gate 7b and 7c and the CX gate 7e do not cross over the unrelated qubit q2, it may be said that the quantum circuit 7 is a circuit easier to read than the quantum circuit 6.

The above-described related art for displaying the force-directed graph and the graph using the time series axis in an easily-readable manner are techniques in view of graphs other than the quantum circuit, and are unable to deal with constraints specific to the quantum circuit. The related art is thus unable to change the quantum circuit 6 illustrated in FIG. 13 to a quantum circuit such as the quantum circuit 7 illustrated in FIG. 14.

SUMMARY

According to an aspect of the embodiment, there is provided a display program, a display method, and an information processing apparatus capable of displaying a quantum circuit in an easily-readable manner.

According to an aspect of the embodiments, a display program for causing a computer to execute a process, the process includes determining, among a first plurality of bits in a quantum circuit, a position that is not located between a second plurality of bits of a first type, the position being a position of a bit of a second type, determining an order of the second plurality of bits, based on a number of times a gate circuit intersects an unrelated bit among the second plurality of bits, and displaying the first plurality of bits in parallel, based on the determined position and the determined order.

BRIEF DESCRIPTION OF DRAWINGS

FIG. 1 is a diagram for explaining a first definition;
FIG. 2 is a diagram for explaining a second definition;
FIG. 3 is a diagram (part 1) for explaining processing of an information processing apparatus according to the present embodiment;
FIG. 4 is a diagram (part 2) for explaining the processing of the information processing apparatus according to the present embodiment;
FIG. 5 is a diagram (part 3) for explaining the processing of the information processing apparatus according to the present embodiment;
FIG. 6 is a functional block diagram illustrating a configuration of the information processing apparatus according to the present embodiment;
FIG. 7 is a flowchart illustrating a processing procedure of the information processing apparatus according to the present embodiment;
FIG. 8 is a flowchart illustrating a processing procedure of order determination processing;
FIG. 9 is a diagram for explaining other processing of the information processing apparatus;
FIG. 10 is a diagram illustrating an example of a hardware configuration of a computer that implements functions similar to those of the information processing apparatus in the embodiment;
FIG. 11 is a diagram illustrating an example of a GUI of a quantum circuit in a related art;
FIG. 12 is a diagram illustrating an example of a graph of a related art;
FIG. 13 is a diagram (part 1) for explaining a problem of the related art; and
FIG. 14 is a diagram (part 2) for explaining the problem of the related art.

DESCRIPTION OF EMBODIMENTS

Hereinafter, an embodiment of techniques with which a quantum circuit may be displayed in an easily-readable manner is described in detail based on the drawings. This disclosure is not limited by the embodiment.

[Embodiment]

An information processing apparatus according to the present embodiment facilitates reading of a quantum circuit by interchanging positions of qubits in the quantum circuit based on a complexity of the quantum circuit in the case where a display screen of the quantum circuit is generated.
First, the complexity of the quantum circuit used by the information processing apparatus according to the present embodiment is described. The complexity C of the quantum circuit is defined by a formula (1). The higher the complexity C is, the more difficult the quantum circuit is to read. According to the present embodiment, improving the easiness of reading is assumed to be causing the complexity C to approach 0 by interchanging the positions of the qubits.

$$\text{Complexity } C = C1 + C2 \dots (1)$$

A value of "C1" included in the formula (1) is distances determined by a "first definition", and the distances are determined by relationships between each of quantum gates and qubits. A value of "C2" included in the formula (1) is a distance determined by a "second definition", and is determined by a distance between each two quantum gates. The first definition and the second definition are described below one by one.
First, the first definition is described. For example, the first definition includes the following definitions (1-1), (1-2), (1-3), and (1-4).
(1-1) A distance for a single quantum gate is defined as "0".
(1-2) A distance for a box-shaped quantum gate crossing over a plurality of qubits is defined as "0".
(1-3) The number of qubits unrelated to a quantum gate among plurality of qubits crossing over a line segment of the quantum gate is defined as the distance.
(1-4) When qubits over which a box-shaped quantum gate crosses are attempted to be moved away from each other, the distance is defined as "infinity (max)".

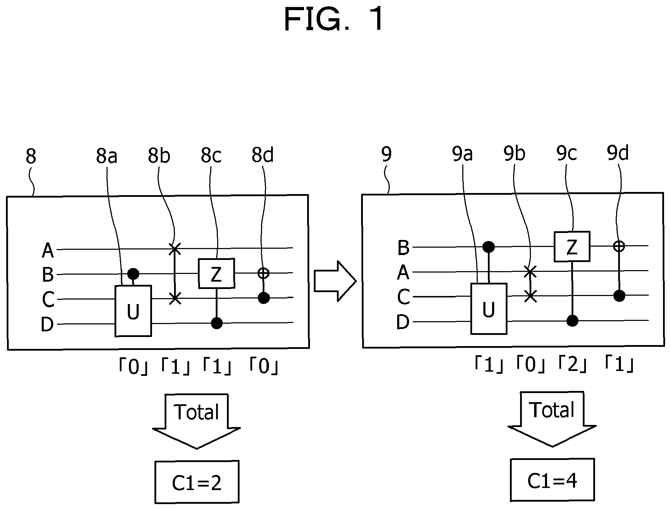

FIG. 1 is a diagram for explaining the first definition. First, description is given by using a quantum circuit 8 in FIG. 1. In the quantum circuit 8, a CU gate 8a, a SWAP gate 8b, a CZ gate 8c, and a CX gate 8d are arranged on qubits A, B, C, and D.

Let us focus on the CU gate 8a. In the CU gate 8a, a U gate is a box-shaped quantum gate crossing over the qubits C and D, and a line segment is set for the qubit B. The line segment of the CU gate 8a crosses over no unrelated qubit. The distance for the CU gate 8a is thus "0".

Let us focus on the SWAP gate 8b. In the SWAP gate 8b, single quantum gates are set for the qubits A and C, respectively. A line segment of the SWAP gate 8b crosses over the unrelated qubit B. The distance for the SWAP gate 8b is thus "1".

Let us focus on the CZ gate 8c. In the CZ gate 8c, a single Z gate is set for the qubit B, and a line segment of the CZ gate 8c is set for the qubit D. The line segment of the CZ gate 8c crosses over the unrelated qubit C. The distance for the CZ gate 8c is thus "1".

Let us focus on the CX gate 8d. In the CX gate 8d, a single X gate is set for the qubit B, and a line segment of the CX gate 8d is coupled to the qubit C. The line segment of the CX gate 8d crosses over no unrelated qubit. The distance for the CX gate 8d is thus "0".

A sum of the distances for the respective quantum gates included in the quantum circuit 8 is the value of C1 of the quantum circuit 8 obtained by the first definition. For example, the value of C1 of the quantum circuit 8 is "2".

Next, description is given by using a quantum circuit 9 in FIG. 1. The quantum circuit 9 is a circuit in which the positions of the qubits A and B of the quantum circuit 8 are interchanged, and the quantum circuit 9 and the quantum circuit 8 are equivalent circuits. In the quantum circuit 9, a CU gate 9a, a SWAP gate 9b, a CZ gate 9c, and a CX gate 9d are arranged on qubits A, B, C, and D.

Let us focus on the CU gate 9a. In the CU gate 9a, a U gate is a box-shaped quantum gate crossing over the qubits C and D, and a line segment is set for the qubit B. The line segment of the CU gate 9a crosses over the unrelated qubit A. The distance for the CU gate 9a is thus "1".

Let us focus on to the SWAP gate 9b. In the SWAP gate 9b, single quantum gates are set for the qubits A and C, respectively. A line segment of the SWAP gate 9b crosses over no unrelated qubit. The distance for the SWAP gate 9b is thus "0".

Let us focus on the CZ gate 9c. In the CZ gate 9c, a single Z gate is set for the qubit B, and a line segment of the CZ gate 9c is set for the qubit D. The line segment of the CZ gate 9c crosses over the unrelated qubits A and C. The distance for the CZ gate 9c is thus "2".

Let us focus on the CX gate 9d. In the CX gate 9d, a single X gate is set for the qubit B, and a line segment of the CX gate 9d is coupled to the qubit C. The line segment of the CX gate 9d crosses over the unrelated qubit A. The distance for the CX gate 9d is thus "1".

A sum of the distances for the respective quantum gates included in the quantum circuit 9 is the value of C1 of the quantum circuit 9 obtained by the first definition. For example, the value of C1 of the quantum circuit 9 is "4".

The second definition is described next. In the second definition, when a first quantum gate and a second quantum gate are adjacent to each other, the number of qubits from the first quantum gate to the second quantum gate is set as the distance between each two quantum gates.

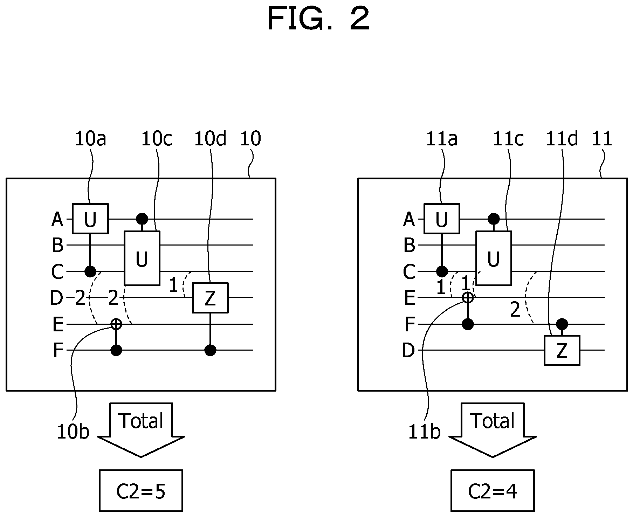

FIG. 2 is a diagram for explaining the second definition. First, description is given by using a quantum circuit 10 in FIG. 2. In the quantum circuit 10, CU gates 10a and 10c, a CX gate 10b, and a CZ gate 10d are arranged on qubits A, B, C, D, E, and F.

In the CU gate 10a, a single U gate is set for the qubit A, and a line segment of the CU gate 10a is set for the qubit C. In the CX gate 10b, a single X gate is set for the qubit E, and a line segment of the CX gate 10b is coupled to the qubit F. In the CU gate 10c, a U gate is a box-shaped quantum gate crossing over the qubits B and C, and a line segment is set for the qubit A. In the CZ gate 10d, a single Z gate is set for the qubit D, and a line segment of the CZ gate 10d is set for the qubit F.

Focusing on the adjacent CU gate 10a and CX gate 10b, a distance based on the second definition (distance from the qubit C to the qubit E) is "2". Focusing on the adjacent CX gate 10b and CU gate 10c, a distance based on the second definition (distance from the qubit C to the qubit E) is "2". Focusing on the adjacent CU gate 10c and CZ gate 10d, a distance based on the second definition (distance from the qubit C to the qubit D) is "1".

A sum of the distances of the adjacent quantum gates included in the quantum circuit 10 is the value of C2 of the quantum circuit 10 obtained by the second definition. For example, the value of C2 of the quantum circuit 10 is "5".

Next, description is given by using a quantum circuit 11 in FIG. 2. In the quantum circuit 11, CU gates 11a and 11c, a CX gate 11b, and a CZ gate 11d are arranged on the qubits A, B, C, D, E, and F.

In the CU gate 11a, a single U gate is set for the qubit A, and a line segment of the CU gate 11a is set for the qubit C. In the CX gate 11b, a single X gate is set for the qubit E, and a line segment of the CX gate 11b is coupled to the qubit F. In the CU gate 11c, a U gate is a box-shaped quantum gate crossing over the qubits B and C, and a line segment is set for the qubit A. In the CZ gate 11d, a single Z gate is set for the qubit D, and a line segment of the CZ gate 11d is set for the qubit F.

Focusing on the adjacent CU gate 11a and CX gate 11b, a distance based on the second definition (distance from the qubit C to the qubit E) is "1". Focusing on the adjacent CX gate 11b and CU gate 11c, a distance based on the second definition (distance from the qubit C to the qubit E) is "1". Focusing on the adjacent CU gate 11c and CZ gate 11d, a distance based on the second definition (distance from the qubit C to the qubit F) is "2".

A sum of the distances of the adjacent quantum gates included in the quantum circuit 11 is the value of C2 of the quantum circuit 11 obtained by the second definition. For example, the value of C2 of the quantum circuit 11 is "4".

The complexity of the quantum circuit used by the information processing apparatus according to the present embodiment has been described above. An example of processing performed by the information processing apparatus according to the present embodiment is described next.

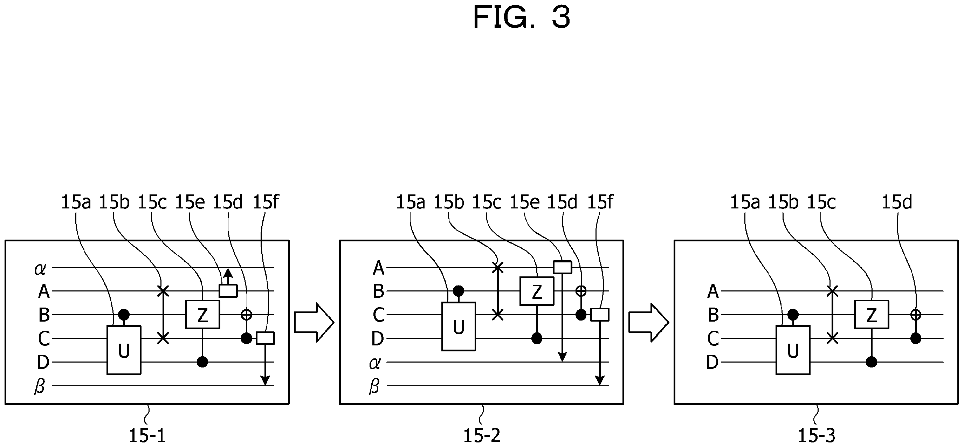

FIGs. 3, 4, and 5 are diagrams for explaining the processing of the information processing apparatus according to the present embodiment. First, description is given by using a quantum circuit 15-1 in FIG. 3. In the quantum circuit 15-1, a CU gate 15a, a SWAP gate 15b, a CZ gate 15c, a CX gate 15d, and measurement gates 15e and 15f are set for qubits A, B, C, and D and classical bits $\alpha$ and $\beta$.

In the CU gate 15a, a U gate is a box-shaped quantum gate crossing over the qubits C and D, and a line segment is set for the qubit B. In the SWAP gate 15b, single quantum gates are set for the qubits A and C, respectively. In the CZ gate 15c, a single Z gate is set for the qubit B, and a line segment of the CZ gate 15c is set for the qubit D. In the CX gate 15d, a single X gate is set for the qubit B, and a line segment of the CX gate 15d is coupled to the qubit C. The measurement gate 15e is set for the qubit A, and a line segment is coupled to the classical bit a. The measurement gate 15f is set for the qubit C, and a line segment is coupled to the classical bit $\beta$.

The information processing apparatus generates a quantum circuit 15-2 by moving the classical bits $\alpha$ and $\beta$ included in the quantum circuit 15-1 to a bottom portion. When there is an unused qubit among the qubits A, B, C, and D, the information processing apparatus moves the unused qubit to the bottom portion. The unused qubit is a qubit for which no quantum gate is set and which is coupled to none of line segments of the quantum gates. Illustration of the unused qubit is omitted in the quantum circuit 15-1 in FIG. 3.

The information processing apparatus performs the following processing for a quantum circuit 15-3 that is a portion of the quantum circuit 15-2 corresponding to the qubits A, B, C, and D and the CU gate 15a, the SWAP gate 15b, the CZ gate 15c, and the CX gate 15d relating to the qubits A, B, C, and D. For example, the information processing apparatus presents rearrangement of the qubits that reduces the complexity of the quantum circuit.

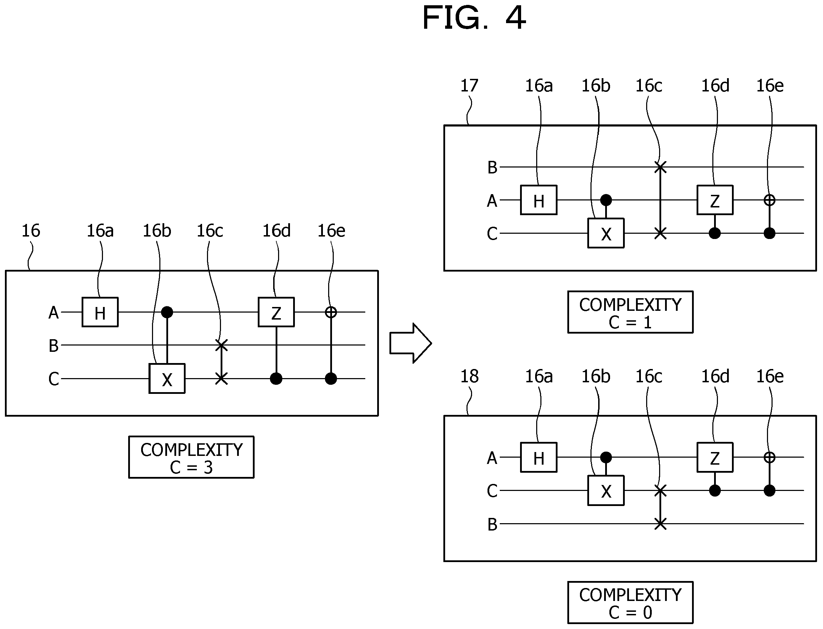

Description proceeds to explanation of FIG. 4. For convenience of explanation, the processing of the information processing apparatus is described by using a quantum circuit 16 instead of the quantum circuit 15-3 in FIG. 3. In the quantum circuit 16, an H gate 16a, a CX gate 16b, a SWAP gate 16c, a CZ gate 16d, and a CX gate 16e are set for the qubits A, B, and C.

In the H gate 16a, a single H gate is set for the qubit A. In the CX gate 16b, a single X gate is set for the qubit C, and a line segment of the CX gate 16b is coupled to the qubit A. In the SWAP gate 16c, single quantum gates are set for the qubits B and C, respectively. In the CZ gate 16d, a single Z gate is set for the qubit A, and a line segment of the CZ gate 16d is set for the qubit C. In the CX gate 16e, a single X gate is set for the qubit A, and a line segment of the CX gate 16e is coupled to the qubit C.

The information processing apparatus calculates the distance C1 of the quantum circuit 16 based on the first definition and the distance C2 of the quantum circuit 16 based on the second definition to calculate the complexity C of the quantum circuit 16 based on the formula (1).

The information processing apparatus calculates the distance C1 = 3 of the quantum circuit 16 based on the first definition. This is because the CX gate 16b crosses over the unrelated qubit B, the CZ gate 16d crosses over the unrelated qubit B, and the CX gate 16e crosses over the unrelated qubit B.

The information processing apparatus calculates the distance C2 = 0 of the quantum circuit 16 based on the second definition. This is because the distance of each two adjacent quantum gates is 0.

The information processing apparatus performs the above-described processing to calculate "complexity C = 3" of the quantum circuit 16 based on the formula (1).

The information processing apparatus then calculates the complexity C of a quantum circuit 17 in the case where the qubit A and the qubit B of the quantum circuit 16 are interchanged. The information processing apparatus also calculates the complexity C of a quantum circuit 18 in the case where the qubit B and the qubit C of the quantum circuit 16 are interchanged. Based on the calculation results of the complexity C, the information processing apparatus presents rearrangement of the qubits that achieves a lower complexity.

The information processing apparatus calculates the distance C1 of the quantum circuit 17 based on the first definition and calculates the distance C2 of the quantum circuit 17 based on the second definition to calculate the complexity C of the quantum circuit 17 in which the qubit A and the qubit B are interchanged.

The information processing apparatus calculates the distance C1 = 1 of the quantum circuit 17 based on the first definition. This is because the SWAP gate 16c crosses over the unrelated qubit A.

The information processing apparatus calculates the distance C2 = 0 of the quantum circuit 17 based on the second definition. This is because the distance of each two adjacent quantum gates is 0.

The information processing apparatus performs the above-described processing to calculate "complexity C = 1" of the quantum circuit 17 based on the formula (1).

The information processing apparatus calculates the distance C1 of the quantum circuit 18 based on the first definition and calculates the distance C2 of the quantum circuit 18 based on the second definition to calculate the complexity C of the quantum circuit 18 in which the qubit B and the qubit C are interchanged.

The information processing apparatus calculates the distance C1 = 0 of the quantum circuit 18 based on the first definition. This is because there is no quantum gate crossing over an unrelated qubit.

The information processing apparatus calculates the distance C2 = 0 of the quantum circuit 18 based on the second definition. This is because the distance of each two adjacent quantum gates is 0.

The information processing apparatus determines the quantum circuit 18 that has the lowest complexity among the quantum circuits 16, 17, and 18, and presents rearrangement of the qubits for changing the quantum circuit 16 to the quantum circuit 18. The rearrangement of the qubits for changing the quantum circuit 16 to the quantum circuit 18 is interchanging of the qubit B and the qubit C.

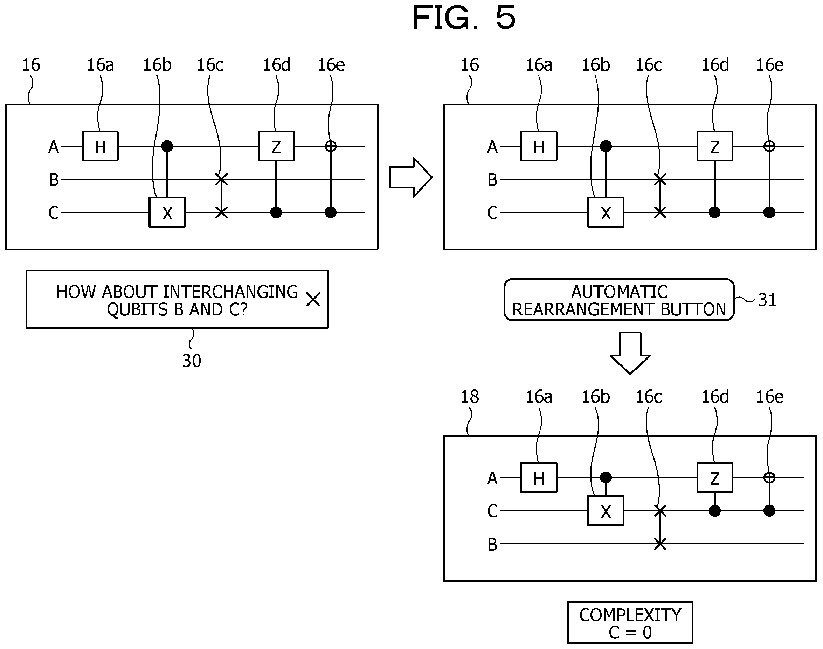

Description proceeds to explanation of FIG. 5. The information processing apparatus presents a message 30. The message 30 is a message "how about interchanging the qubits B and C?". The information processing apparatus then displays an automatic rearrangement button 31. When the automatic rearrangement button 31 is pressed, the information processing apparatus interchanges the qubit B and the qubit C of the quantum circuit 16 to change the quantum circuit 16 to the quantum circuit 18.

As described above, the information processing apparatus according to the present embodiment moves the position of the unused qubit and the classical bit among the plurality of qubits and classical bits included in the quantum circuit, to the bottom portion. The information processing apparatus determines the order of the qubits based on the number of times the quantum gates intersect the unrelated qubits among the qubits, and displays the plurality of qubits in parallel according to the determined order. The quantum circuit may be thereby displayed in an easily-readable manner.

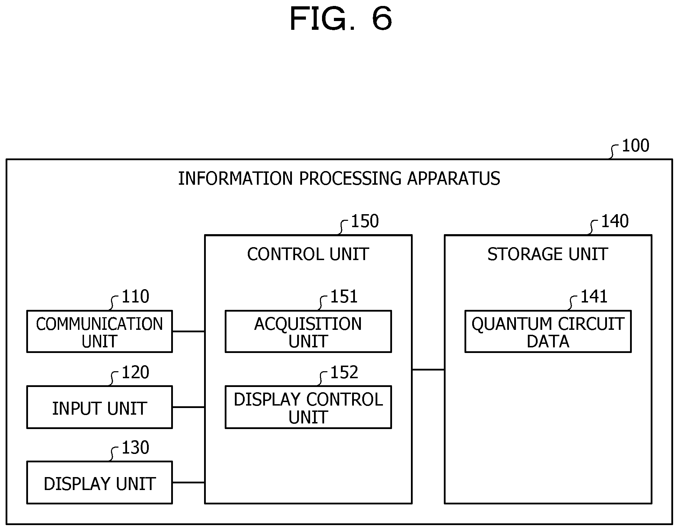

A configuration example of the information processing apparatus that executes the processing described above is described next. FIG. 6 is a functional block diagram illustrating the configuration of the information processing apparatus according to the present embodiment. As illustrated in FIG. 6, an information processing apparatus 100 includes a communication unit 110, an input unit 120, a display unit 130, a storage unit 140, and a control unit 150.

The communication unit 110 executes data communication with an external apparatus or the like via a network. The communication unit 110 may receive quantum circuit data 141 to be described later from the external apparatus.

The input unit 120 receives an operation from a user. For example, the user operates the input unit 120 to perform processing of setting the quantum gates for the qubits in the quantum circuit.

The display unit 130 displays information outputted from the control unit 150. For example, the display unit 130 displays the display screen of the quantum circuit.

The storage unit 140 includes the quantum circuit data 141.

The quantum circuit data 141 includes various types of information on the quantum circuit. For example, the quantum circuit data 141 includes the types of the qubits, the positions of the qubits, the types of the classical bits, and the positions of the classical bits. The quantum circuit data 141 also includes information on the types of the quantum gates, the qubits for which the quantum gates are set, and the qubits to which line segments of the quantum gates are coupled.

The positions of the qubits and the classical bits correspond to the order from the top set for the quantum circuit. For example, when description is given by using the quantum circuit 15-1 in FIG. 3, the position of the classical bit $\alpha$ is "1", and the position of the classical bit $\beta$ is "6". The positions of the qubits "A", "B", "C", and "D" are "2", "3", "4", and "5", respectively.

The control unit 150 includes an acquisition unit 151 and a display control unit 152.

The acquisition unit 151 acquires the quantum circuit data 141 from the external apparatus or the like, and registers the acquired quantum circuit data 141 in the storage unit 140. The acquisition unit 151 may acquire, as the quantum circuit data 141, information on the quantum circuit generated by the operation of the user on the input unit 120.

The display control unit 152 generates the display screen of the quantum circuit in which the qubits, the classical bits, and the quantum gates are arranged, based on the quantum circuit data 141, and displays the generated display screen on the display unit 130. The quantum circuit generated based on the quantum circuit data 141 is the quantum circuit 15-1 or the like illustrated in FIG. 3.

For example, the display control unit 152 performs initial processing, processing of calculating the complexity, and processing of determining the order of the qubits on the generated quantum circuit.

First, the initial processing executed by the display control unit 152 is described. The display control unit 152 sets the position of the classical bit included in the quantum circuit to a position in the bottom portion. The display control unit 152 also sets the position of the unused qubit among the qubits included in the quantum circuit to a position in the bottom portion.

The processing of the display control unit 152 is described by using FIG. 3. The display control unit 152 changes the positions of the classical bits α and β included in the quantum circuit 15-1 to positions corresponding to the bottom portion, and thereby generates the quantum circuit 15-2. For example, the display control unit 152 changes the position of the classical bit α from "1" to "5". Since the position of the classical bit β is already the position corresponding to the bottom layer, the display control unit 152 leaves the position of the classical bit β as it is.

When there is the unused qubit among the qubits A, B, C, and D, the display control unit 152 moves the unused qubit to the bottom portion. For example, when the qubit A of the quantum circuit 15-1 is the unused qubit, the display control unit 152 changes the position of the qubit A from "2" to "4".

The classical bit and the unused qubit moved to the bottom portion are excluded from processing targets in the following processing of calculating the complexity and processing of presenting movement of the qubits.

When the classical bit and the unused qubit are to be moved to the bottom portion, the display control unit 152 may cause the display unit 130 to display a move button and a message such as "how about moving the classical bit and the unused qubit?". When the move button is pressed, the display control unit 152 sets the position of the classical bit and the position of the unused qubit in the quantum circuit in the bottom portion.

The processing of calculating the complexity executed by the display control unit 152 is described next. In the follow description, a qubit at a position "n" that is included in the quantum circuit is referred to as "qubit $q_n$". A qubit $q_{n-1}$ means a qubit prior to the qubit $q_n$ (upper qubit). A qubit $q_{n+1}$ means a qubit subsequent to the qubit $q_n$ (lower qubit).

The display control unit 152 calculates a variation width X of the complexity in the case where the position of the qubit $q_n$ and the position of the qubit $q_{n-1}$ are changed for the quantum circuit. The variation width X is a value obtained by subtracting the complexity of the quantum circuit before the change of the position of the qubit $q_n$ and the position of the qubit $q_{n-1}$, from the complexity of the quantum circuit after the change. As described above, the display control unit 152 calculates the complexity of the quantum circuit based on the formula (1).

The case where the variation width X takes a positive value means that the complexity has increased, and the case where the variation width X takes a negative value means that the complexity has decreased. When the variation width X is Max due to (1-4) of the first definition, the display control unit 152 changes the position of the qubit $q_n$ and the position of a qubit $q_{n-2}$, and calculates the variation width X.

The display control unit 152 then calculates a variation width Y of the complexity in the case where the position of the qubit $q_n$ and the position of the qubit $q_{n+1}$ are changed for the quantum circuit. The variation width Y is a value obtained by subtracting the complexity of the quantum circuit before the change of the position of the qubit $q_n$ and the position of the qubit $q_{n+1}$, from the complexity of the quantum circuit after the change. As described above, the display control unit 152 calculates the complexity of the quantum circuit based on the formula (1).

The case where the variation width Y takes a positive value means that the complexity has increased, and the case where the variation width Y takes a negative value means that the complexity has decreased. When the variation width Y is Max due (1-4) of the first definition, the display control unit 152 changes the position of the qubit $q_n$ and the position of a qubit $q_{n+2}$, and calculates the variation width Y.

The processing of determining the order of the qubits executed by the display control unit 152 is described next. When a condition 1 is satisfied, the display control unit 152 presents that the position of the qubit $q_n$ and the position of the qubit $q_{n+1}$ in the quantum circuit are to be changed. For example, the display control unit 152 causes the display unit 130 to display the automatic rearrangement button and a message "how about interchanging the qubit $q_n$ and the qubit $q_{n+1}$?". When the automatic rearrangement button is pressed, the display control unit 152 interchanges the qubit $q_n$ and the qubit $q_{n+1}$ in the quantum circuit, and determines the order (order from the top end) of the plurality of qubits in the quantum circuit.

$$\text{Variation width } X \geq 0 \text{ and variation width } Y < 0 \text{ ... (condition 1)}$$

Meanwhile, when a condition 2 is satisfied, the display control unit 152 presents that the position of the qubit $q_n$ and the position of the qubit $q_{n-1}$ in the quantum circuit are to be changed. For example, the display control unit 152 causes the display unit 130 to display the automatic rearrangement button and a message "how about interchanging the qubit $q_n$ and the qubit $q_{n-1}$?". When the automatic rearrangement button is pressed, the display control unit 152 interchanges the qubit $q_n$ and the qubit $q_{n-1}$ in the quantum circuit, and determines the order (order from the top end) of the plurality of qubits in the quantum circuit.

$$\text{Variation width } Y \geq 0 \text{ and variation width } X < 0 \text{ ... (condition 2)}$$

As described in FIG. 4, the display control unit 152 may compare the complexity of the quantum circuit 16 before the change with the complexities of the quantum circuits 17 and 18 after the change, and present rearrangement of the qubits such that the quantum circuit 16 is changed to the quantum circuit 18 with the lowest complexity.

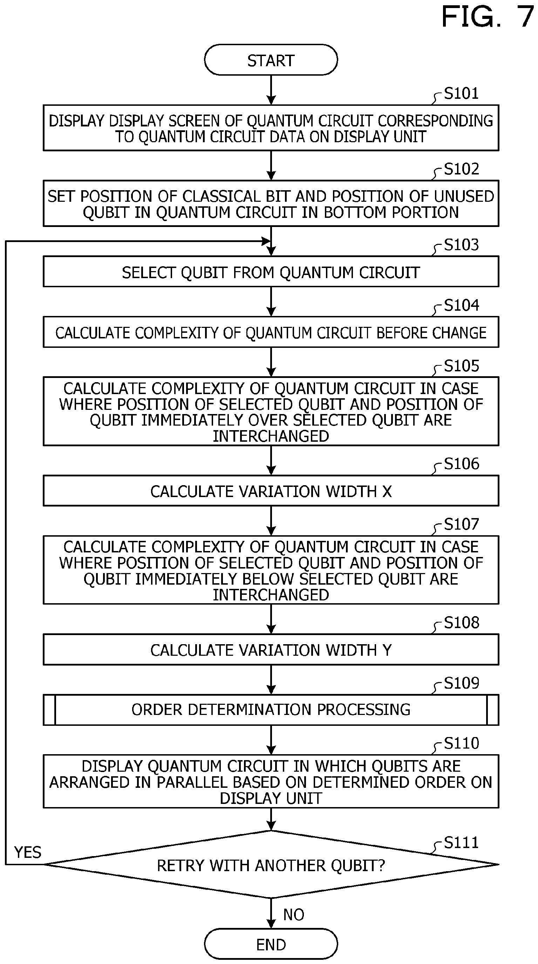

An example of a processing procedure of the information processing apparatus according to the present embodiment is described next. FIG. 7 is a flowchart illustrating a processing procedure of the information processing apparatus according to the present embodiment. As illustrated in FIG. 7, the display control unit 152 of the information processing apparatus causes the display unit 130 to display the display screen of the quantum circuit based on the quantum circuit data 141 (operation S101).

The display control unit 152 sets the position of the classical bit and the position of the unused qubit in the quantum circuit in the bottom portion (operation S102). The display control unit 152 selects a qubit from the quantum circuit (operation S103). The display control unit 152 calculates the complexity of the quantum circuit before the change (operation S104).

The display control unit 152 calculates the complexity of the quantum circuit in the case where the position of the selected qubit and the position of the qubit immediately over the selected qubit are interchanged (operation S105). The display control unit 152 calculates the variation width X (operation S106).

The display control unit 152 calculates the complexity of the quantum circuit in the case where the position of the selected qubit and the position of the qubit immediately below the selected qubit are interchanged (operation S107). The display control unit 152 calculates the variation width Y (operation S108).

The display control unit 152 executes the order determination processing (operation S109). The display control unit 152 causes the display unit 130 to display the quantum circuit in which the qubits are arranged in parallel based on the determined order (operation S110).

When retry is to be performed with another qubit (Yes in operation S111), the display control unit 152 proceeds to operation S103. Meanwhile, when no retry is to be performed with another qubit (No in operation S111), the display control unit 152 terminates the processing.

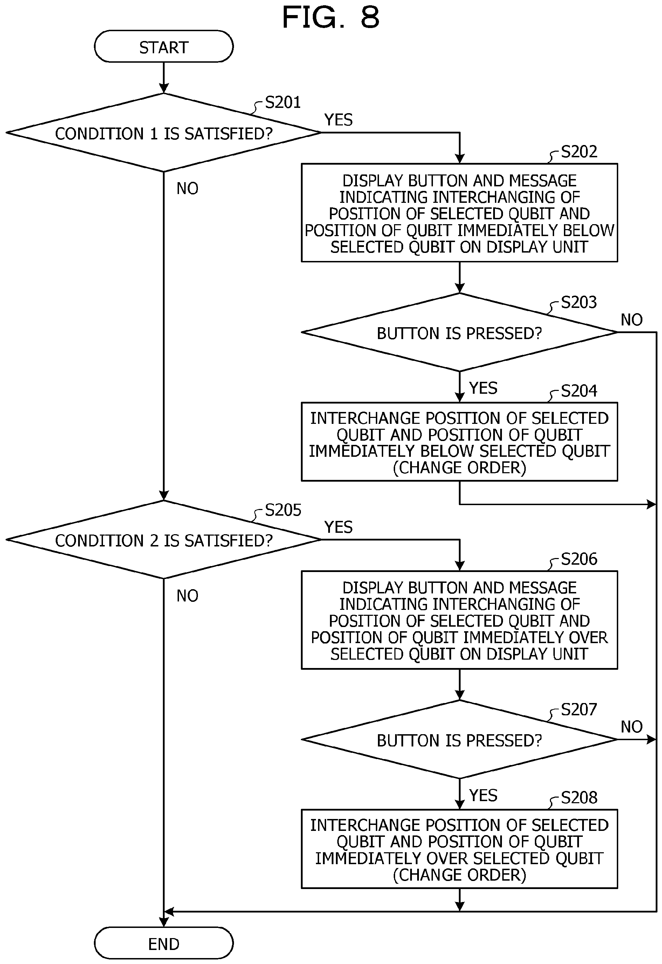

A processing procedure of the order determination processing described in operation S109 in FIG. 7 is described next. FIG. 8 is a flowchart illustrating the processing procedure of the order determination processing. As illustrated in FIG. 8, the display control unit 152 of the information processing apparatus 100 determines whether the condition 1 is satisfied or not (operation S201). When the condition 1 is not satisfied (No in operation S201), the display control unit 152 proceeds to operation S205.

Meanwhile, when the condition 1 is satisfied (Yes in operation S201), the display control unit 152 causes the display unit 130 to display a button and a message indicating interchanging of the selected qubit and the qubit immediately below the selected qubit (operation S202).

When the button is not pressed (No in operation S203), the display control unit 152 terminates the order determination processing.

Meanwhile, when the button is pressed (Yes in operation S203), the display control unit 152 interchanges the position of the selected qubit and the position of the qubit immediately below the selected qubit (changes the order) (operation S204), and terminates the order determination processing.

Description proceeds to explanation of the processing in operation S205. The display control unit 152 determines whether the condition 2 is satisfied or not (operation S205). When the condition 2 is not satisfied (No in operation S205), the display control unit 152 terminates the order determination processing.

Meanwhile, when the condition 2 is satisfied (Yes in operation S205), the display control unit 152 causes the display unit 130 to display a button and a message indicating interchanging of the selected qubit and the qubit immediately over the selected qubit (operation S206).

When the button is not pressed (No in operation S207), the display control unit 152 terminates the order determination processing.

Meanwhile, when the button is pressed (Yes in operation S207), the display control unit 152 interchanges the position of the selected qubit and the position of the qubit immediately over the selected qubit (changes the order) (operation S208), and terminates the order determination processing.

Next, effects of the information processing apparatus 100 according to the present embodiment are described. The information processing apparatus 100 moves the position of the unused qubit and the positions of the classical bits among the plurality of qubits and classical bits included in the quantum circuit, to the bottom portion. The information processing apparatus 100 determines the order of the qubits based on the number of times the quantum gates intersect the unrelated qubits among the qubits, and displays the plurality of qubits in parallel according to the determined order. The quantum circuit may be thereby displayed in an easily-readable manner.

The information processing apparatus 100 calculates the complexity based on the number of times the quantum gates intersect the unrelated qubits among the qubits and the distances of the adjacent quantum gates, and changes the order of the qubits in the quantum circuit such that the complexity approaches 0. An easily-readable quantum circuit may be thereby efficiently generated.

The information processing apparatus 100 calculates the variation width X of the complexity in the case where the position of the qubit $q_n$ and the position of a qubit $q_{n-1}$ in the quantum circuit are changed. The information processing apparatus 100 also calculates the variation width Y of the complexity in the case where the position of the qubit $q_n$ and the position of the qubit $q_{n+1}$ in the quantum circuit are changed. The information processing apparatus 100 determines qubits to be targets of the interchange in the quantum circuit, based on the variation widths X and Y and Conditions 1 and 2. A quantum circuit with the arrangement order of the qubits that achieves a lower complexity may be thereby generated.

In the above description, the information processing apparatus 100 displays the message and the button when the order of the qubits in the quantum circuit is to be interchanged, and interchanges the qubits when the button is pressed by the user. However, the information processing apparatus 100 is not limited to this. For example, the information processing apparatus 100 may automatically interchange the order of the qubits without displaying the message. Whether the interchange of the qubits is to be confirmed by the user or automatically performed is set in advance.

Other processing of the information processing apparatus 100 is described next. For example, the information processing apparatus 100 selects a predetermined number of qubits of interest among the plurality of qubits in the quantum circuit. The information processing apparatus 100 determines the arrangement order that minimizes the complexity for the predetermined number m of qubits of interest. The information processing apparatus 100 repeatedly executes the above-described processing while changing the qubits of interest, and thereby generates an easily-readable quantum circuit.

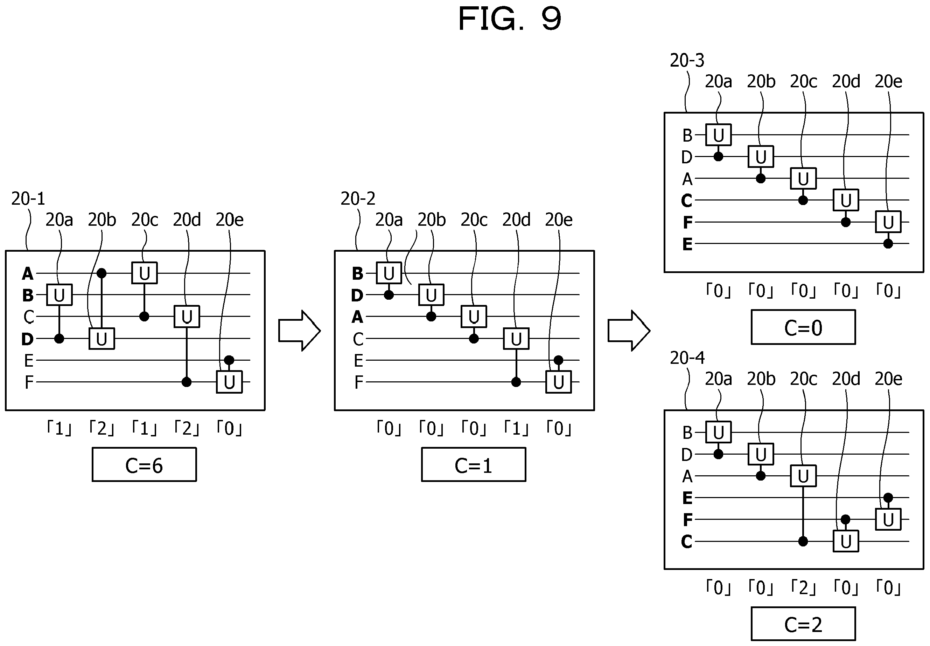

FIG. 9 is a diagram for explaining the other processing of the information processing apparatus. Description is given by using a quantum circuit 20-1 in FIG. 9. Description is given assuming that the number (predetermined number m) of qubits selected in one operation by the information processing apparatus 100 is "3".

In the quantum circuit 20-1, CU gates 20a, 20b, 20c, 20d, and 20e are arranged on the qubits A, B, C, D, E, and F. The CU gate 20a crosses over the unrelated qubit C, the CU gate 20b crosses over the unrelated qubits B and C, the CU gate 20c crosses over the unrelated qubit B, and the CU gate 20d crosses over the unrelated qubits D and E. The distances of the adjacent CU gates are 0. The complexity C of the quantum circuit 20-1 based on the formula (1) is thus "6".

In the CU gate 20a, a single U gate is set for the qubit B, and a line segment of the CU gate 20a is coupled to the qubit D. In the CU gate 20b, a single U gate is set for the qubit D, and a line segment of the CU gate 20b is coupled to the qubit A.

In the CU gate 20c, a single U gate is set for the qubit A, and a line segment of the CU gate 20c is coupled to the qubit C. In the CU gate 20d, a single U gate is set for the qubit C, and a line segment of the CU gate 20d is coupled to the qubit F. In the CU gate 20e, a single U gate is set for the qubit F, and a line segment of the CU gate 20e is coupled to the qubit E.

The display control unit 152 of the information processing apparatus 100 randomly selects the predetermined number "3" of qubits of interest from the qubits A to F in the quantum circuit 20-1. Here, description is given assuming that the display control unit 152 selects the qubits A, B, and D as the qubits of interest.

The display control unit 152 moves the qubits A, B, and D of interest to the top, and moves the other qubits C to F to the bottom. The display control unit 152 determines the order that minimizes the complexity among orders relating to the qubits A, B, and D, based on the qubits A, B, and D and the CU gates 20a and 20b relating to the qubits A, B, and D. There are 3! (six types of) orders of the qubits A, B, and D. The display control unit 152 calculates the complexity while excluding the CU gate 20c relating to the qubit A of interest and the qubit C of no interest and the other CU gates 20d and 20e.

The display control unit 152 calculates the complexity in the case where the order of the qubits of interest is "A, B, D", the complexity in the case where the order is "A, D, B", the complexity in the case where the order is "B, A, D", and the complexity in the case where the order is "B, D, A". The display control unit 152 calculates the complexity in the case where the order of the qubits of interest is "D, A, B" and the complexity in the case where the order is "D, B, A".

Among the plurality of complexities described above, the complexity in the case where the order of the qubits is "B, D, A" is assumed to be the lowest. In this case, the display control unit 152 generates a quantum circuit 20-2 in which the order of the qubits is B, D, A, C, E, F. In the quantum circuit 20-2, the CU gate 20d crosses over the unrelated qubit E. The distances of the adjacent CU gates are 0. The complexity C of the quantum circuit 20-2 based on the formula (1) is thus "1".

The display control unit 152 then selects the other qubits C, E, and F as the qubits of interest. The display control unit 152 determines the order that minimizes the complexity among a plurality of orders relating to the qubits C, E, and F, based on the qubits C, E, and F and the CU gates 20d and 20e relating to the qubits C, E, and F. There are 3! (six types of) orders of the qubits C, E, and F. The display control unit 152 calculates the complexity while excluding the CU gate 20c relating to the qubit C of interest and the qubit A of no interest and the other CU gates 20a and 20b.

The display control unit 152 calculates the complexity in the case where the order of the qubits of interest is "C, E, F", the complexity in the case where the order is "C, F, E", the complexity in the case where the order is "E, C, F", and the complexity in the case where the order is "E, F, C". The display control unit 152 calculates the complexity in the case where the order of the qubits of interest is "F, C, E" and the complexity in the case where the order is "F, E, C".

Among the plurality of complexities described above, the complexity in the case where the order of the qubits is "C, F, E" or "E, F, C" is assumed to be the lowest. In this case, the display control unit 152 generates a quantum circuit 20-3 in which the order of the qubits is B, D, A, C, F, E and a quantum circuit 20-4 in which the order of the qubits is B, D, A, E, F, C.

First, in the quantum circuit 20-3, there is no CU gate crossing over an unrelated qubit. The distances of the adjacent CU gates are 0. The complexity C of the quantum circuit 20-3 based on the formula (1) is thus "0".

Meanwhile, in the quantum circuit 20-4, the CU gate 20c crosses over the unrelated qubits E and F. The distances of the adjacent CU gates are 0. The complexity C of the quantum circuit 20-4 based on the formula (1) is thus "2".

Since the complexity of the quantum circuit 20-3 is lower than the complexity of the quantum circuit 20-4, the display control unit 152 adopts the order of the qubits B, D, A, C, F, E in the quantum circuit 20-3. For example, the display control unit 152 causes the display unit 130 to display a display screen of the quantum circuit 20-3.

As described above, the information processing apparatus 100 repeatedly executes the processing of selecting the predetermined number of qubits of interest among the plurality of qubits in the quantum circuit and determining the arrangement order that minimizes the complexity for the predetermined number m of qubits of interest. An easily-readable quantum circuit may be thereby generated.

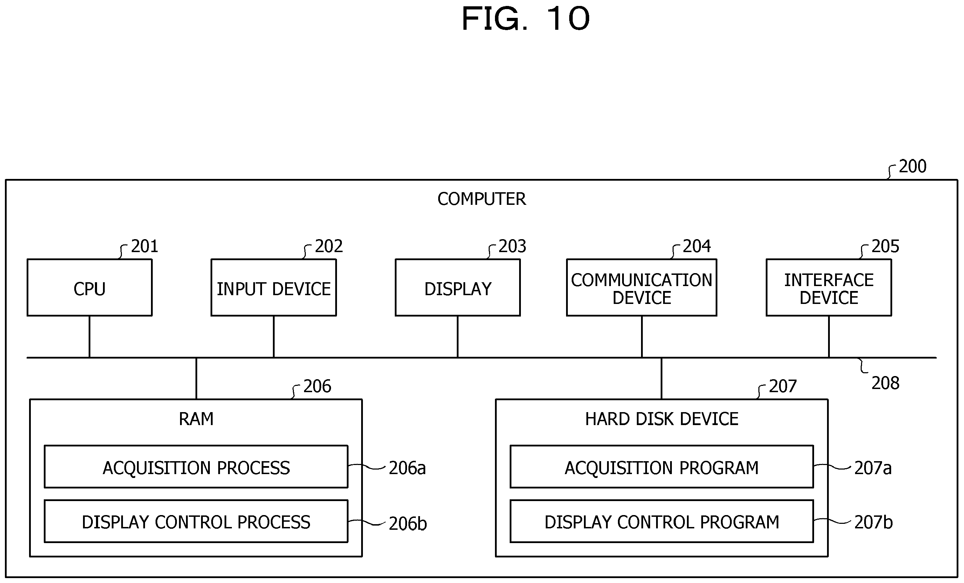

An example of a hardware configuration of a computer that implements functions similar to those of the above-described information processing apparatus 100 is described next. FIG. 10 is a diagram illustrating the example of the hardware configuration of the computer that implements functions similar to those of the information processing apparatus in the embodiment.

As illustrated in FIG. 10, a computer 200 includes a central processing unit (CPU) 201 that executes various types of arithmetic processing, an input device 202 that receives an input of data from the user, and a display 203. The computer 200 also includes a communication device 204 that exchanges data with an external apparatus or the like via a wired or wireless network, and an interface device 205. The computer 200 also includes a random-access memory (RAM) 206 that temporarily stores various types of information and a hard disk device 207. Each of the devices 201 to 207 is coupled to a bus 208.

The hard disk device 207 includes an acquisition program 207a and a display control program 207b. The CPU 201 reads each of the programs 207a and 207b and loads each of the programs 207a and 207b onto the RAM206.

The acquisition program 207a functions as an acquisition process 206a. The display control program 207b functions as a display control process 206b.

Processing of the acquisition process 206a corresponds to the processing of the acquisition unit 151. Processing of the display control process 206b corresponds to the processing of the display control unit 152.

Each of the programs 207a and 207b may not be stored in the hard disk device 207 from the beginning. For example, each program may be stored in a "portable physical medium" such as a flexible disk (FD), a compact disk read-only memory (CD-ROM), a Digital Versatile Disc (DVD), a magnetooptical disk, an integrated circuit (IC) card, or the like configured to be inserted in the computer 200. The computer 200 may read and execute each of the programs 207a and 207b.

**Claims**

1. A display program for causing a computer to execute a process, the process comprising:

   determining, among a first plurality of bits in a quantum circuit, a position that is not located between a second plurality of bits of a first type, the position being a position of a bit of a second type;
   determining an order of the second plurality of bits, based on a number of times a gate circuit intersects an unrelated bit among the second plurality of bits; and
   displaying the first plurality of bits in parallel, based on the determined position and the determined order.

2. The display program according to claim 1, the process further comprising:

   obtaining a complexity based on the number and a distance of adjacent gate circuits set for the second plurality of bits,
   wherein the order of the second plurality of bits is determined based on the complexity.

3. The display program according to claim 2, wherein the order of the second plurality of bits is determined based on the complexity in a case where an order of a displayed position of a predetermined bit and the displayed position of a bit below the predetermined bit among the second plurality of bits is interchanged and the complexity in a case where an order of the displayed position of the predetermined bit and the displayed position of a bit over the predetermined bit is interchanged.

4. The display program according to claim 2,
   wherein the determining the order of the second plurality of bits includes:

   selecting a predetermined number of bits from among the second plurality of bits,
   obtaining the complexity relating to each of orders of the predetermined number of selected bits, and
   determining the order in which the complexity is the lowest as the order of the predetermined number of selected bits.

5. A display method for causing a computer to execute a process, the process comprising:

   determining, among a first plurality of bits in a quantum circuit, a position that is not located between a second plurality of bits of a first type, the position being a position of a bit of a second type;
   determining an order of the second plurality of bits, based on a number of times a gate circuit intersects an unrelated bit among the second plurality of bits; and
   displaying the first plurality of bits in parallel, based on the determined position and the determined order.

6. The display method according to claim 5, the process further comprising:

   obtaining a complexity based on the number and a distance of adjacent gate circuits set for the second plurality of bits,
   wherein the order of the second plurality of bits is determined based on the complexity.

7. The display method according to claim 6, wherein the order of the second plurality of bits is determined based on the complexity in a case where an order of a displayed position of a predetermined bit and the displayed position of a bit below the predetermined bit among the second plurality of bits is interchanged and the complexity in a case where an order of the displayed position of the predetermined bit and the displayed position of a bit over the predetermined bit is interchanged.

8. The display method according to claim 6,
   wherein the determining the order of the second plurality of bits includes:

   selecting a predetermined number of bits from among the second plurality of bits,
   obtaining the complexity relating to each of orders of the predetermined number of selected bits, and
   determining the order in which the complexity is the lowest as the order of the predetermined number of selected bits.

9. An information processing apparatus comprising:
   a control unit configured to:

   determine, among a first plurality of bits in a quantum circuit, a position that is not located between a second plurality of bits of a first type, the position being a position of a bit of a second type;
   determine an order of the second plurality of bits, based on a number of times a gate circuit intersects an unrelated bit among the second plurality of bits; and
   display the first plurality of bits in parallel, based on the determined position and the determined order.

10. The information processing apparatus according to claim 9, wherein the control unit is further configured to:

    obtain a complexity based on the number and a distance of adjacent gate circuits set for the second plurality of bits,
    wherein the order of the second plurality of bits is determined based on the complexity.

11. The information processing apparatus according to claim 10, wherein the order of the second plurality of bits is determined based on the complexity in a case where an order of a displayed position of a predetermined bit and the displayed position of a bit below the predetermined bit among the second plurality of bits is interchanged and the complexity in a case where an order of the displayed position of the predetermined bit and the displayed position of a bit over the predetermined bit is interchanged.

**EP 4 328 810 A1**

12. The information processing apparatus according to claim 10,
wherein the determining the order of the second plurality of bits includes:

selecting a predetermined number of bits from among the second plurality of bits,
obtaining the complexity relating to each of orders of the predetermined number of selected bits, and
determining the order in which the complexity is the lowest as the order of the predetermined number of selected bits.

**12**

# FIG. 1

EP 4 328 810 A1

# FIG. 2

14

FIG. 3

# FIG. 4

COMPLEXITY
C = 3

COMPLEXITY
C = 1

COMPLEXITY
C = 0

EP 4 328 810 A1

# FIG. 5

EP 4 328 810 A1

# FIG. 6

INFORMATION PROCESSING APPARATUS 100

CONTROL UNIT 150

STORAGE UNIT 140

COMMUNICATION UNIT 110

INPUT UNIT 120

DISPLAY UNIT 130

ACQUISITION UNIT 151

DISPLAY CONTROL UNIT 152

QUANTUM CIRCUIT DATA 141

# FIG. 7

START

S101
DISPLAY DISPLAY SCREEN OF QUANTUM CIRCUIT CORRESPONDING TO QUANTUM CIRCUIT DATA ON DISPLAY UNIT

S102
SET POSITION OF CLASSICAL BIT AND POSITION OF UNUSED QUBIT IN QUANTUM CIRCUIT IN BOTTOM PORTION

S103
SELECT QUBIT FROM QUANTUM CIRCUIT

S104
CALCULATE COMPLEXITY OF QUANTUM CIRCUIT BEFORE CHANGE

S105
CALCULATE COMPLEXITY OF QUANTUM CIRCUIT IN CASE WHERE POSITION OF SELECTED QUBIT AND POSITION OF QUBIT IMMEDIATELY OVER SELECTED QUBIT ARE INTERCHANGED

S106
CALCULATE VARIATION WIDTH X

S107
CALCULATE COMPLEXITY OF QUANTUM CIRCUIT IN CASE WHERE POSITION OF SELECTED QUBIT AND POSITION OF QUBIT IMMEDIATELY BELOW SELECTED QUBIT ARE INTERCHANGED

S108
CALCULATE VARIATION WIDTH Y

S109
ORDER DETERMINATION PROCESSING

S110
DISPLAY QUANTUM CIRCUIT IN WHICH QUBITS ARE ARRANGED IN PARALLEL BASED ON DETERMINED ORDER ON DISPLAY UNIT

S111
RETRY WITH ANOTHER QUBIT?

YES

NO

END

# FIG. 8

START

S201

CONDITION 1 IS SATISFIED? — YES

NO

S202

DISPLAY BUTTON AND MESSAGE INDICATING INTERCHANGING OF POSITION OF SELECTED QUBIT AND POSITION OF QUBIT IMMEDIATELY BELOW SELECTED QUBIT ON DISPLAY UNIT

S203

BUTTON IS PRESSED? — NO

YES

S204

INTERCHANGE POSITION OF SELECTED QUBIT AND POSITION OF QUBIT IMMEDIATELY BELOW SELECTED QUBIT (CHANGE ORDER)

S205

CONDITION 2 IS SATISFIED? — YES

NO

S206

DISPLAY BUTTON AND MESSAGE INDICATING INTERCHANGING OF POSITION OF SELECTED QUBIT AND POSITION OF QUBIT IMMEDIATELY OVER SELECTED QUBIT ON DISPLAY UNIT

S207

BUTTON IS PRESSED? — NO

YES

S208

INTERCHANGE POSITION OF SELECTED QUBIT AND POSITION OF QUBIT IMMEDIATELY OVER SELECTED QUBIT (CHANGE ORDER)

END

FIG. 9

# FIG. 10

COMPUTER 200

| CPU 201 | INPUT DEVICE 202 | DISPLAY 203 | COMMUNICATION DEVICE 204 | INTERFACE DEVICE 205 |

208

RAM 206
- ACQUISITION PROCESS 206a
- DISPLAY CONTROL PROCESS 206b

HARD DISK DEVICE 207
- ACQUISITION PROGRAM 207a
- DISPLAY CONTROL PROGRAM 207b

EP 4 328 810 A1

# FIG. 11

EP 4 328 810 A1

OpenQASM2.0 ⌄

Open in Quantum Lab

```
 1   OPENQASM 2.0;
 2   include "qelib1.inc";
 3
 4   qreg q[3];
 5   creg c[3];
 6
 7   h q[0];
 8   cy q[0],q[2];
 9   swap q[1],q[2];
10   cy q[2],q[0];
11   cx q[2],q[0];
```

Probabilities ⌄

Q-Sphere ⌄

Computational basisi states

Phase angle

☑ State ☐

# FIG. 12

EP 4 328 810 A1

# FIG. 13

# FIG. 14

Europäisches
Patentamt

European
Patent Office

Office européen
des brevets

# EUROPEAN SEARCH REPORT

Application Number

EP 23 18 3281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALFAILAKAWI MOHAMMAD GH ET AL: "Harmony-search algorithm for 2D nearest neighbor quantum circuits realization", EXPERT SYSTEMS WITH APPLICATIONS, ELSEVIER, AMSTERDAM, NL, vol. 61, 14 May 2016 (2016-05-14), pages 16-27, XP029619700, ISSN: 0957-4174, DOI: 10.1016/J.ESWA.2016.04.038 * abstract * * page 4 – page 11 * ----- | 1-12 | INV. G06N10/20 |
| A | PEDRAM MASSOUD ET AL: "Layout Optimization for Quantum Circuits with Linear Nearest Neighbor Architectures", IEEE CIRCUITS AND SYSTEMS MAGAZINE, vol. 16, no. 2, 23 May 2016 (2016-05-23), pages 62-74, XP011612122, ISSN: 1531-636X, DOI: 10.1109/MCAS.2016.2549950 [retrieved on 2016-05-23] * the whole document * ----- | 1-12 | |

TECHNICAL FIELDS SEARCHED (IPC)

G06N

The present search report has been drawn up for all claims

| Place of search | Date of completion of the search | Examiner |
|---|---|---|
| The Hague | 19 January 2024 | Tsakonas, Athanasios |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021179573 A
- JP 2005513680 A
- US 20210216898
- US 20190102496